# EUROPEAN PATENT SPECIFICATION

(11) **EP 3 440 364 B1**
(45) Date of publication and mention of the grant of the patent: **08.12.2021**
(21) Application number: 17716753.3
(22) Date of filing: 31.03.2017
(51) Int. Cl.: F15B 20/00, F15B 11/028, G01N 3/04

(54) **MATERIALS TESTING SYSTEM AND METHOD**
MATERIALPRÜFSYSTEM UND VERFAHREN
SYSTÈME DE TEST DE MATÉRIELS ET PROCÉDÉ

(30) Priority: 04.04.2016 US 201662317678 P
(43) Date of publication of application: 13.02.2019
(73) Proprietor: Illinois Tool Works, Inc., Glenview, Illinois 60025 (US)
(72) Inventor: BARRETT, Jr., Albert, Evariste, Glenview IL 60025 (US); FRY, David, John, Glenview IL 60025 (US); ZAZZARELLI, Alessandro, Glenview IL 60025 (US)
(74) Representative: Trinks, Ole
(86) International application number: PCT/US2017/025285
(87) International publication number: WO 2017/176568

(56) References cited:
- EP-A2- 0 648 900
- JP-A- 2000 298 084
- US-A1- 2005 138 924
- US-A1- 2006 021 446
- US-A1- 2011 078 508

## Description

### Field of the Disclosure

The present disclosure relates to a materials testing system as defined in the preamble of claim 1 and to a method for controlling pressure in such a materials testing system as defined in the preamble of claim 7.

Such a system and method is known from JP 2000 298 084 A.

### Description of the Prior Art

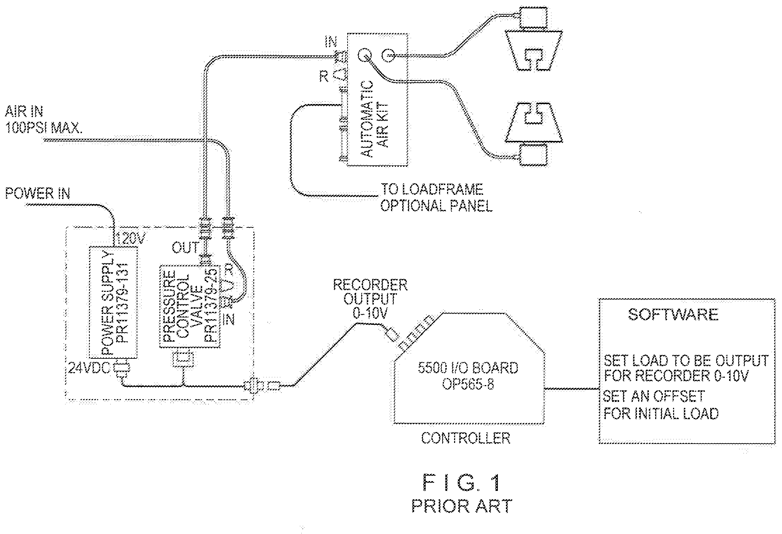

In the prior art, materials testing systems often employ pneumatic clamps or grips for holding the specimen during the test. Manufacturers of materials testing system provide a wide array of pneumatic control systems to open and close the grips and to regulate the pressure. However, a number of challenges or problems may exist in that the grips may close at full test pressure when loading the specimen thereby raising safety concerns; a fast closing rate could pinch the fingers of the user or cause the specimen to be damaged; and in that the manual setting of pressures may impact the repeatability of results. Additionally, similar deficiencies that may arise in the prior art are that to manually set the pressure for each specimen type may be time-consuming; the process may not be adequately reliable for quality control and result repeatability; some implementations of pressure feedback may impact the accuracy of the results; the prior art apparatus may allow the test to proceed even if the correct pressure has not been achieved; and the test pressure is not reported in the software or firmware of the device thereby making it difficult to critically analyze the proper functioning of the apparatus during the test. Figure 1 is an example of prior art.

Some prior art includes European Patent Application EP 2631496 A2, entitled "Fluid Control, in particular Pneumatic Control for Testing Machines". Further prior art includes the Zwick/Roell product literature for the "Pneumatic Control Unit", document nos. PI 480 2.0812 and PI 818 2.0912.

### SUMMARY OF THE DISCLOSURE

The present invention is defined by a materials testing system according to claim 1 and a method according to claim 7.

The disclosure relates to electronic control of the hydraulic or pneumatic components of a materials testing system.

Embodiments of the present disclosure typically have the benefit of variable gripping pressure wherein a user adjustable low gripping pressure is used in set-up mode. This reduces the of risk of pinch injuries thereby increasing safety. The pressure is adjustable, typically within a low range up to 1 bar (15 psi). The low pressure causes a slow closing speed of the grips, thereby allowing time to the user to avoid injury.

There is a fast ramp up or fast fill to full pressure after the grips are closed and a separate command is given. The firmware controls the gripping pressure on a per test basis thereby allowing for a repeatability of results.

This is intended to provide a substantially fail-safe design. The pressure is logged and checked in firmware and/or software and the initiation of the test is prevented if the target pressure or set pressure is not achieved.

### BRIEF DESCRIPTION OF THE DRAWINGS

Further objects and advantages of the disclosure will become apparent from the following description and from the accompanying drawings, wherein:
Figure 1 is a schematic of prior art.
Figure 2 is a schematic of an embodiment of the present disclosure.
Figure 3 is a flowchart of the controller firmware of an embodiment of the present disclosure.
Figure 4 is a flowchart of the main supervisory task or executor task of the firmware of an embodiment of the present disclosure.
Figure 5 is a flowchart of the pressure control task of the firmware of an embodiment of the present disclosure.
Figure 6 is a flowchart of the CAN bus communications task of the firmware of an embodiment of the present disclosure.
Figure 7 is a flowchart of the close grip request function of the firmware of an embodiment of the present disclosure.
Figure 8 is a flowchart of the open grip request function of the firmware of an embodiment of the present disclosure.

### DETAILED DESCRIPTION OF THE PREFERRED EMBODIMENT

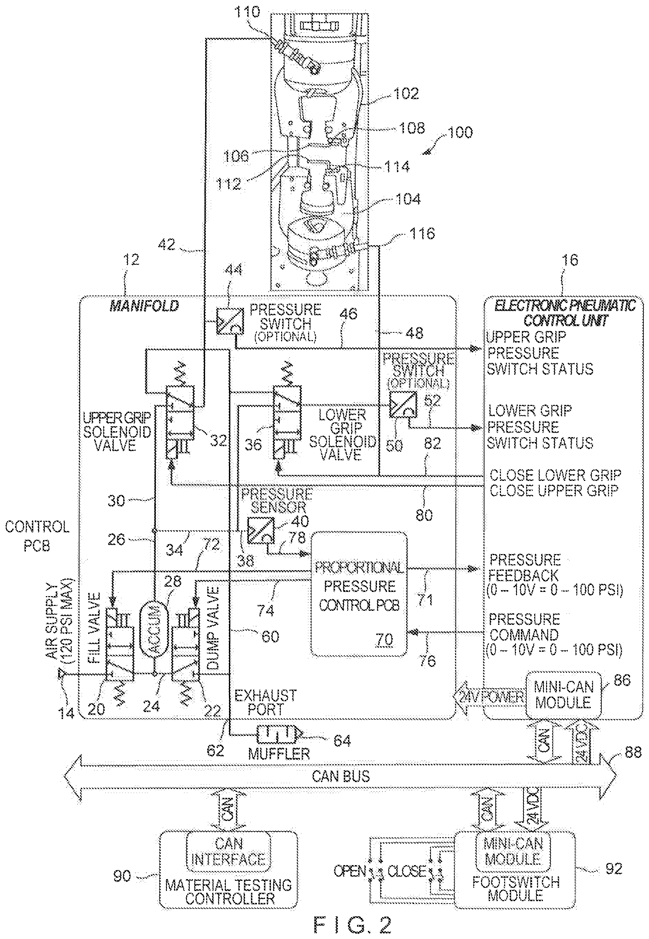

Referring now to the figures in detail, one sees that Figure 2 is a schematic of an embodiment of the apparatus 10 of the present disclosure.

A materials testing device 100 is provided. The materials testing device 100 typically includes vertically opposed upper and lower grips 102, 104. Upper grip 102 includes horizontally opposed upper jaw faces 106, 108 which are activated in response to upper pneumatic input 110. Likewise, lower grip 104 includes horizontally opposed lower jaw faces 112, 114 which are activated in response to lower pneumatic input 116. Upper and lower pneumatic inputs 110, 116 are in fluid (air) communication with manifold 12 which receives pressurized air through pressurized air supply 14 (illustrated as being provided at 120 psi (0.827 MPa), somewhat higher than a typical desired operating pressure of the materials testing device 100). This pressurized air ultimately operates the jaw faces 106, 108, 112, 114, but is pneumatically regulated by manifold 12 which is, in turn, in electronic communication with and controlled by electronic pneumatic control unit 16 (typically implemented as a printed circuit board). Pressurized air from pressurized air supply 14 is received by first input solenoid valve (fill valve) 20 which is in fluid communication with second input solenoid valve (dump valve) 22 via intermediate air line 24. Pressurized air line 26, which includes accumulator 28, extends from intermediate air line 24 and includes a first fork 30 which provides pressurized air to upper grip solenoid valve 32 and a second fork 34 which provides pressurized air to lower grip solenoid valve 36, with a tap line 38 leading to pressure sensor 40.

Upper grip solenoid valve 32 provides pneumatically regulated pressure to upper pneumatic input 110 of upper grip 102 via upper grip pneumatic line 42, thereby operating upper jaw faces 106, 108. An optional first pressure switch 44 may tap into upper grip pneumatic line 42 and provide a control signal to electronic pneumatic control unit 16 via first pressure switch signal line 46. Likewise, lower grip solenoid valve 36 provides pneumatically regulated pressure to lower pneumatic input 116 of lower grip 104 via lower grip pneumatic line 48, thereby operating lower jaw faces 112, 114. An optional second pressure switch 50 may tap into lower grip pneumatic line 48 and provide a control signal to electronic pneumatic control unit 16 via second pressure switch signal line 52.

The exhaust ports of second input solenoid valve 22, upper grip solenoid valve 32 and lower grip solenoid valve 36 are in fluid communication with exhaust line 60 which exits the manifold 12 via exhaust port 62 and, typically, muffler 64. The combination of the various states of the first and second input solenoid valves 20, 22 provides the fundamental operation of manifold 12. When first input solenoid valve 20 is closed, pressure is not communicated from pressurized air supply 14 to manifold 12. When first input solenoid valve 20 is open and second input solenoid valve 22 is closed, air pressure is provided to the upper and lower grip solenoid valves 32, 36. When upper and lower grip solenoid valves 32, 36 are open with air pressure being provided thereto, the upper jaw faces 106, 108 are driven toward each other and the lower jaw faces 110, 116 are driven toward each other. When first and second input solenoid valves 20, 22 are closed, air pressure is communicated from pressurized air supply 14 but exhausted through exhaust port 62, thereby relieving any pressure supplied to upper and lower grip solenoid valves 32, 36 and allowing upper jaw faces 106, 108 to move apart and lower jaw faces 110, 116 to likewise move apart.

Proportional pressure control logic unit 70 (typically implemented as a printed circuit board) receives a pressure command via analog pressure command line or digital-to-analog converter 76 from electronic pneumatic control unit 16. This is typically an analog value from between zero and ten volts, corresponding a desired pressure range of 0-100 psig (0-0.689 MPa).
Proportional pressure control logic unit 70 further receives an electronic pressure signal from pressure sensor 40 via line 78. Proportional pressure control logic unit 70 uses this information to control the configurations (open or closed) of first and second input solenoid valves 20, 22 via electrical control lines 72, 74, wherein the electrical control lines 72, 74 thereby control the pressure in pressurized air line 26 and associated lines.

More specifically, the electronic pneumatic control unit 16 connects to the materials testing controller 90 via the CAN bus 88. The materials testing controller 90, in turn, connects via an ethernet cable or similar connection to a remote processing device (not shown) where the materials testing application is running. The values for the desired method pressure and safe pressure, used to close the upper and lower grips 102, 104, are entered as separate parameters by an operator or similar personnel using this software application.

Electronic pneumatic control unit 16 optionally receives input from the first and second pressure switches 44, 50 and, as described above, further receives the pressure feedback signal from proportional pressure control unit 70 via line 71. Electronic pneumatic control unit 16, based on this information, sends grip closing signals to upper and lower grip solenoid valves 32, 36 via lines 80, 82, respectively, and, as previously described, a pressure command via analog pressure command line or digital-to-analog converter 76 to electronic pneumatic control unit 16.

Additionally, electronic pneumatic control unit 16 includes a module 86 which can provide power to manifold 12, and further transmit information to and receive information from a bus 88, which may be connected to external devices such as a materials testing controller 90, a footswitch module 92, and various recording devices (not shown).

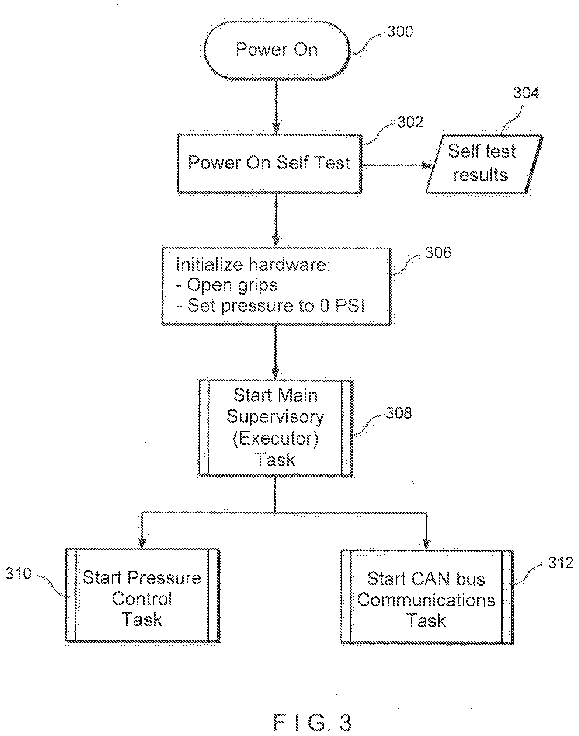

Turning now to an overview of the firmware as illustrated in Figures 3-8, the embedded software or firmware on the electronic pneumatic control unit 16 manages the applied pressure and operating state (open or closed) of the upper and lower pneumatic grips 102, 104. The firmware running on the microcontroller (such as, but not limited to a Texas Instruments Hercules^{®} microcontroller) on this electronic pneumatic control unit communicates via the CAN bus 88 to the materials testing controller 90 and the footswitch module 92. The materials testing controller 90 sends application-specific operating mode and pressure parameters, while the operator-initiated footswitch module 92 sends trigger signals to open and close the upper and lower pneumatic grips 102, 104. The on-board firmware stores the operating parameters and modes locally, and implements the steps necessary to apply pressure and open and close the grips in response to the signals from the footswitch module 92. The grip control operating mode and pressure are set by the main system software, and are dependent upon the specific application and test specimen. The electronic pneumatic control unit 16 performs the requested operation without application-specific knowledge, using a pre-defined state sequence for each operating mode.

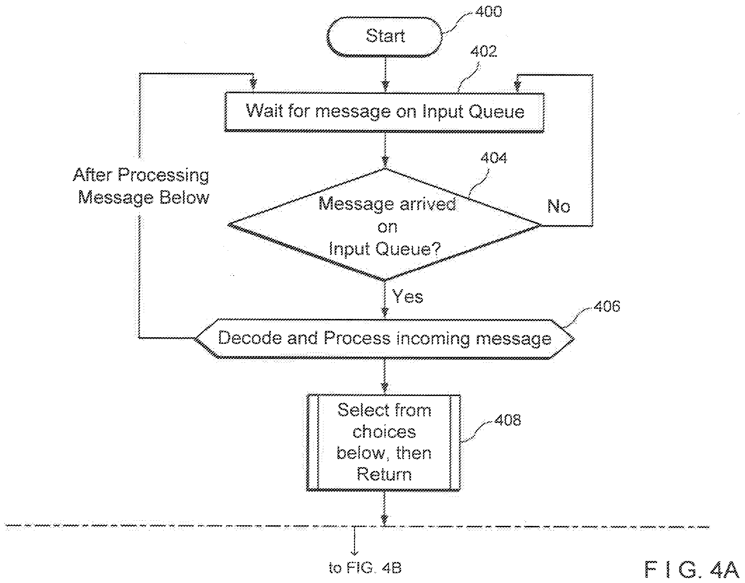

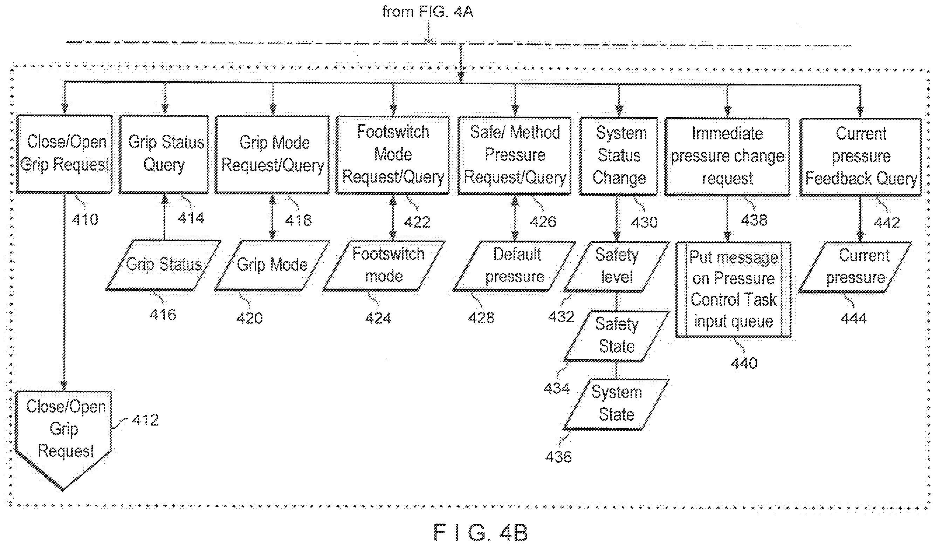

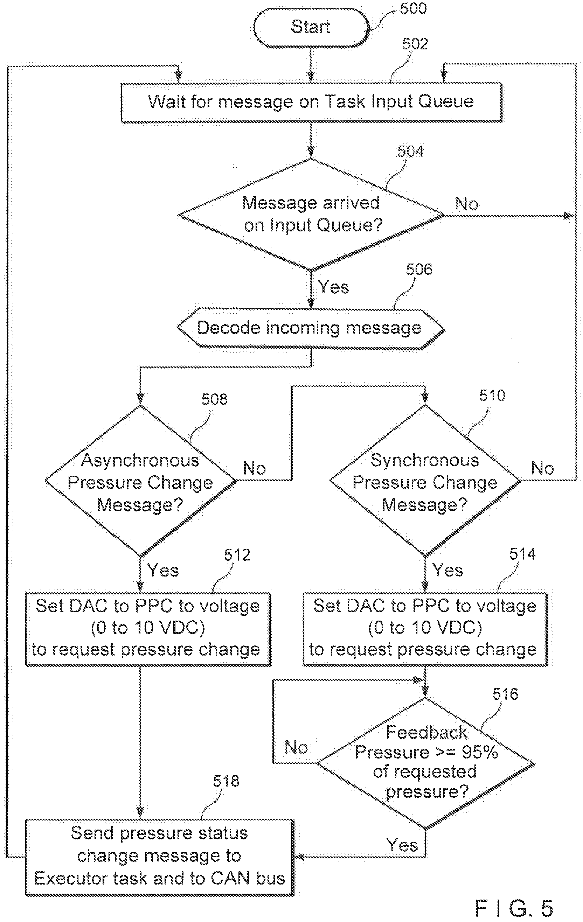

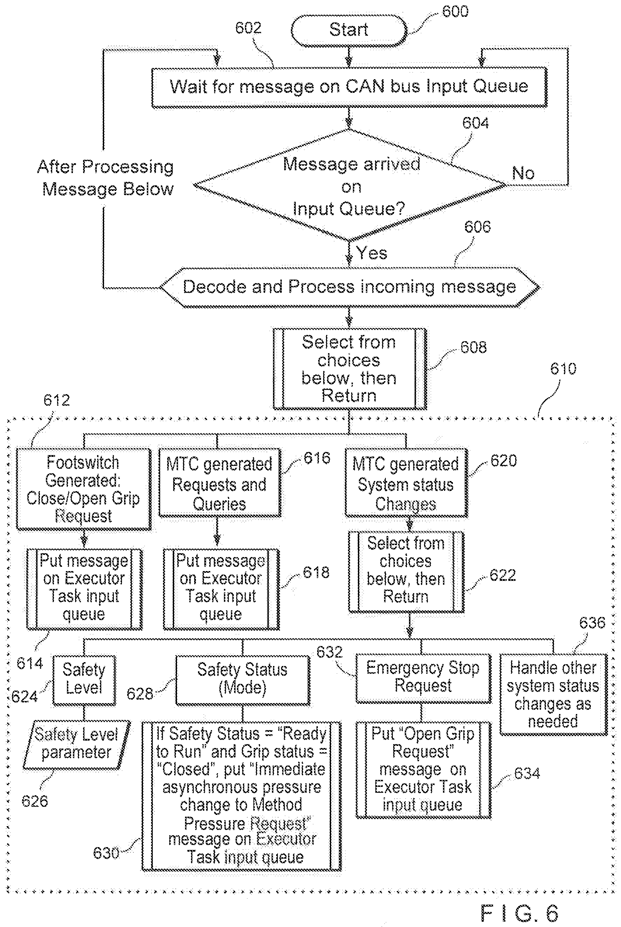

The firmware is made up of three main tasks, which run concurrently on a real-time operating system (RTOS) to achieve the above functions. These tasks are as follows:
1. Main supervisory task, illustrated in Figure 4, which coordinates the overall execution of the sequences in response to requests arriving via the CAN bus 88.
2. Pressure control task, illustrated in Figure 5, which sets and monitors the air pressure using analog inputs and outputs to/from the Proportional Pressure Controller (PPC) PCB 70.
3. CAN bus communications task, illustrated in Figure 6, which receives incoming safety and non-safety messages from the footswitch module 92 (see blocks 612, 614 of Figure 6) and the material testing controller 90 (see blocks 616, 618 of Figure 6), and sends outgoing status messages (see blocks 620, 622, 624, 626, 628, 630, 632, 634, 636 of Figure 6), following the CANopen and CANopen Safety protocols.

The logical flow of the firmware is typically as follows:
1. When the firmware starts up as shown in Figure 3, block 300, it performs a self-test to check the state of its on-board hardware as shown in block 302. The results are saved on-board as shown in block 304 and later reported to the main controller over the CAN bus 88.
2. The on-board hardware is then initialized to open the grips 102, 104 and keep the pressure at 0 pounds per square inch (psi) as shown in block 306. The grip states are controlled via digital output bits connected to the top and bottom pneumatic solenoids 32, 36. As shown in block 308, the pressure is set to 0.0 psi (0.0 MPa)
   by writing to a digital-to-analog converter (DAC), which sends a 0.0 Volt signal to the proportional pressure controller 70 via line 76. The calibration of the DAC and proportional pressure controller 70 are matched such that 0 to +10 VDC digital-to-analog converter output corresponds to 0 to 100 psi (0 to 0.689 MPa) of requested pressure.
3. The main supervisory task, or executor task, illustrated in Figure 4, waits for a message to arrive on its input queue. Block 308 on Figure 3 and blocks 400, 402, 404, 406 on Figure 4.
4. The pressure control task, illustrated in Figure 5, sleeps, waits for a pressure change request to arrive on its input queue. Block 310 on Figure 3 and blocks 500, 502, 504 on Figure 5.
5. The CAN bus task, illustrated in Figure 6, waits for a message to arrive via the CAN bus 88. Block 312 on Figure 3 and the loop formed by blocks 600, 602, 604 on Figure 6. When the message arrives, the task decodes it and puts it on the input queue of the executor task. Blocks 606, 608 and 610 on Figure 6.
6. The executor task, see Figure 4, wakes up when a new message arrives on its input queue. Blocks 402, 404, 406, 408 on Figure 4. It proceeds to perform the requested action. The messages include:
   a. Operator-initiated open/close grip request from the footswitch module 92. Blocks 410, 412.
   b. Grip status query from the materials testing controller 90. Blocks 414, 416.
   c. Grip mode request/query from the materials testing controller 90. Blocks 418, 420.
   d. Footswitch module mode request/query from the materials testing controller 90. Blocks 422, 424.
   e. Request immediate change to safe or method pressure. Blocks 426, 428.
   f. System status change (emergency stop, system safety level, materials testing status, etc.) from the materials testing controller 90 or other CAN module. Blocks 430,432,434,436.
   g. Pressure-setting parameter update/query (safe pressure (target), method pressure (target), current pressure) from the materials testing controller 90. Blocks 438, 440.
   h. Current pressure feedback query from the materials testing controller 90. Blocks 442, 444.
7. The materials testing controller 90 first sends messages 6c, 6d, 6g, to define the operating pressures and grip closure sequencing modes to use when message 6a open/close requests are subsequently received from the footswitch module 92. The safe pressure and method pressure parameters received from the materials testing controller 90 in message 6g are saved locally by the firmware. Safe pressure is typically settable to 0 to 15 psi (0 to 0.103 MPa), while method pressure is typically settable in the range of 15-100 psi (0.103-0.689 MPa).

Safe and method pressures are applied automatically to the upper and lower grips 102, 104 by the firmware, based on the system safety level, when message 6a close grip requests are received. The system safety level is a global system parameter which defines the safety behavior of the whole materials testing system, including the grip pressure sequencing. It is broadcast continuously over the CAN bus 88 by the materials testing controller 90 (message 6f). More specifically, when the operator enters the desired values for the method pressure and the safe pressure into the software application, these values are sent to the materials testing controller 90 by an ethernet cable or similar connection. The materials testing controller, in turn, transmits these values to the pneumatic control unit 16 via the CAN bus 88. The control unit 16 stores theses values locally, so that they can be quickly retrieved, converted to an equivalent analog 0-10 volts DC value for a pressure command via line 76 to the proportional pressure controller 70, during the various grip and system states as described herein.

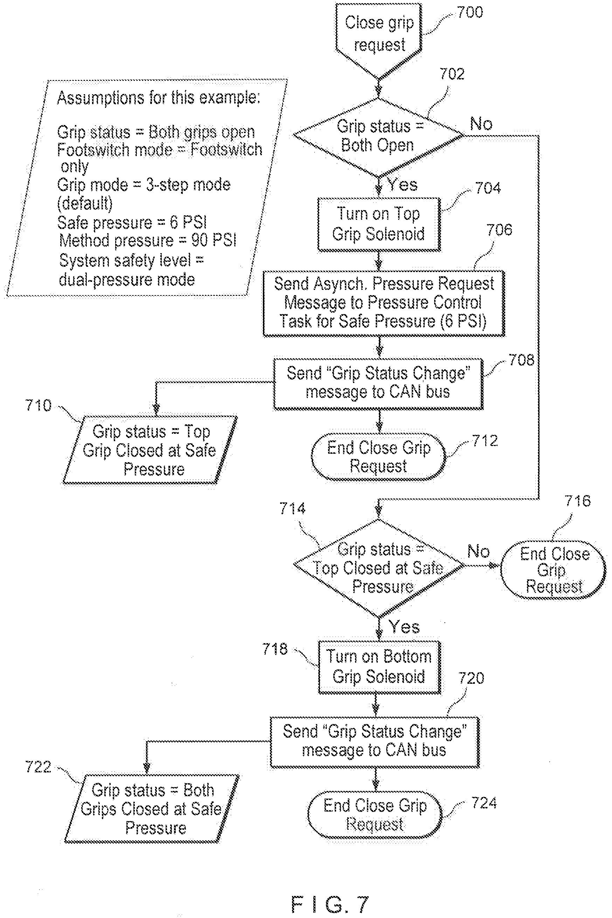

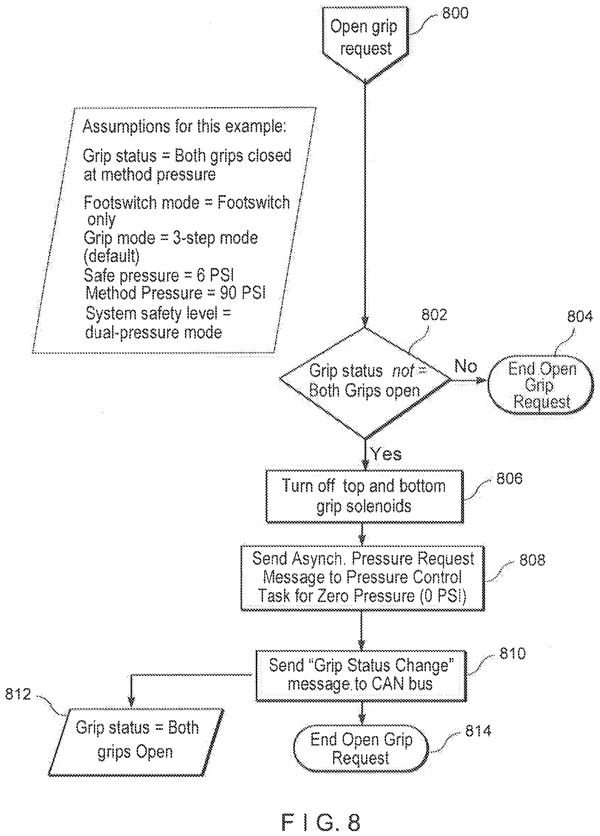

8. In processing message 6a, the executor task of Figure 4 co-ordinates the application or removal of pressure to the upper and lower grips 1 02, 104 with their opening and closing states. The specific sequence of operation is determined by combining the system safety level, system status, grip state, footswitch mode, grip control mode, stored safe pressure, stored method pressure, pressure feedback, and top/bottom grip solenoid output control bits. A typical example of the sequence for a system that is using the enhanced safety level (dual-pressure mode) is as follows, as illustrated in Figure 7:
a. Assume grip state=both grips open; footswitch mode=footswitch only (default); grip control mode=3-step mode (default); safe pressure=6 psi (0.0414 MPa); method pressure=90 psi (0.621 MPa); system status = testing machine enabled and ready to run.
b. Operator steps on the "close" footswitch pedal, causing a "close grip request" CAN bus message to be broadcast. Block 700 of Figure 7.
c. The CAN bus task (see Figure 6) receives this message and puts it on the input queue of the executor task (see Figure 4) for further processing.
d. The executor task reads the new "close grip request" message on its input queue. It looks at the "grip control mode" and knows that the top grip must be closed first. It then turns the top grip solenoid 32 turned on (see blocks 702, 704, Figure 7), connecting regulated air supply output 26 to top grip 102.
e. The executor task then sends a message to the pressure control task to request 6 psi (0.0414 MPa) of air pressure (safe pressure).
f. The pressure control task receives the message on its input queue and sets the analog pressure command line or digital-to-analog converter 76 to output 0.6V DC, corresponding to 6 psi (0.0414 MPa). As a result, the top grip 102 closes slowly using 6 psi (0.0414 MPa) of pressure. Blocks 702, 704, 706, 708, 710, 712 of Figure 7.
g. The executor task sends a "grip status change" message, indicating "top grip closed at safe pressure" to the queue of the CAN bus communications task, which then sends it out the CAN bus 88 to the materials testing controller 90. Block 708 of Figure 7.
h. Sometime later, the operator steps on the "close" footswitch pedal again, causing a "close grip request" CAN bus message to be broadcast again. Block 700 of Figure 7.
i. The CAN bus task receives this message and puts it on the input queue of the executor task for further processing. Block 610 of Figure 6.
j. The executor task reads the new "close grip request" message on its input queue. It looks at the "grip control mode" and current grip status, and knows that the top grip is already closed at safe pressure. Blocks 714, 716 of Figure 7. This means that the bottom grip 104 is to be closed next. It then turns the bottom grip solenoid 36 on, connecting regulated air supply output 26 to bottom grip 104. Block 718 of Figure 7.
k. The executor task sends a "grip status change" message, indicating "both grips closed at safe pressure" to the queue of the CAN bus communications task, which then sends it out the CAN bus 88 to the materials testing controller 90. Block 720 of Figure 7.
l. The grips remain in the "both closed at safe pressure" state (blocks 722, 724 of Figure 7) until the operator manually pushes a "mode" button to put the whole system in the "ready to run" state. When this occurs, the materials testing controller 90 sends a System Status Change message 6f out over the CAN bus 88.
m. The CAN bus task receives this message (6f) and decodes it, and puts a new message (6e) on the on the input queue of the executor task, telling it to immediately change the pressure to the saved "method pressure". Blocks 616, 618 of Figure 6.
n. The executor task then sends a message to the pressure control task to request 90 psi (0.621 MPa) of air pressure (method pressure). Blocks 438, 440 of Figure 4.
o. The pressure control task receives the message (blocks 500, 502, 504, 506, 508, 510 of Figure 5) on its input queue and sets the analog pressure command DAC (line 76) to output 9.0 VDC, corresponding to 90 psi (0.621 MPa). As a result, both upper and lower grips 102, 104 increase their gripping force as the pressure begins ramping up to 90 psi (0.621 MPa) of pressure.
p. The pressure control task monitors the pressure feedback analog output (0 ― 10 VDC) from the proportional pressure control logic unit 70, using an analog-to-digital converter channel of the microcontroller (blocks 512, 514 of Figure 5). When the pressure feedback has reached 95% of the requested pressure (85.5 psi (0.590 MPa) in this example), see block 516 of Figure 5, it changes the grip status to "both grips closed at full pressure", causing the executor task to send it to the CAN bus task, which in turn sends it out over the CAN bus 88 to the rest of the system. Block 518 of Figure 5. The application software will wait for this message to signal it when to begin the materials test.)
q. Sometime later, after the test has finished the operator steps on the "open" footswitch pedal, causing an "open grip request" CAN bus message (6a) to be broadcast. Blocks 800, 802, 804 of Figure 8.
r. The CAN bus task receives this message and puts it on the input queue of the executor task for further processing.
s. The executor task reads the "open grip request" message on its input queue. It then turns the top and bottom grip solenoids 32, 36 off (block 806 on Figure 8), disconnecting the regulated air supply output 26 to both grips 102, 104, and allowing them to exhaust their pressurized air via exhaust port 62. Springs inside the grips 102, 104 will now cause the grips 102, 104 to open, as all pressure has been removed.
t. The executor task then sends a message to the pressure control task to request 0 psi (0 MPa) of air pressure (open). Block 808 of Figure 8.
u. The pressure control task receives the message on its input queue and sets the analog pressure command DAC (76) to output 0.0V DC, corresponding to 0 psi (0 MPa).

This has no immediate effect, since the grips 102, 104 were already opened in step s above. However, it adds a measure of redundancy to insure that the grips will open, even if the solenoids were to get stuck in the "on" state.
v. The executor task sends a "grip status change" message, indicating "grips open" to the queue of the CAN bus communications task, which then sends it out the CAN bus to the materials testing controller 90. Blocks 810, 812, 814 of Figure 8.

The above eight steps describe the basic design and operation of the firmware on the electronic pneumatic control unit 16.

## Claims

1. A materials testing system comprising a materials testing device (100) and an apparatus for controlling pressure in said materials testing device (100), the apparatus including:
- a device (90) configured to receive an electronic command relating to a first target pressure;
- a device (90) configured to receive an electronic command relating to a second target pressure, wherein the second target pressure is higher than the first target pressure;
- a device (92) configured to generate a command for selectively applying the first target pressure or the second target pressure to an output, the output being received by opposing grips (102, 104) of the materials testing device (100);
- a device (32, 36) configured to receive the command for selectively applying the first target pressure or the second target pressure to the output, wherein the first target pressure is applied in response to a first command and the second target pressure is applied in response to a subsequent command; and
- a processing device (16) configured to generate pressure control signals for varying pressure,
**characterized by**
a device (70) configured to receive a signal indicating measured pressure in the apparatus;
wherein the processing device (16) is configured to compare the measured pressure to the selected first or second pressure and generate the control signals;
wherein the opposing grips (102, 104) of the materials testing device (100) are configured to be operated by the first target pressure in a range of greater than 0 to 0.103 MPa (zero to fifteen psi);
wherein the second target pressure preferably is in a range of greater than 0.103 to 0.689 MPa (fifteen psi to one hundred psi); and
wherein the device (92) configured to generate a command for selectively applying the first target pressure or the second target pressure is manually operated.

2. The system of Claim 1,
wherein the opposing grips (102, 104) of the materials testing device (100) are configured to be operated by the first target pressure in a safe range for the human operator.

3. The system of Claim 2,
wherein the second target pressure is the full pressure required for the materials testing device (100).

4. The system of Claim 1,
wherein the device (92) configured to generate a command for selectively applying the first target pressure or the second target pressure is a footswitch.

5. The system of Claim 1,
wherein the electronic commands for first and second target pressures are generated in response to manual input from a control panel.

6. The system of Claim 1,
wherein the electronic commands for first and second target pressures are received from the materials testing device (100).

7. A method for controlling pressure in a materials testing device (100) with a system according to claim 1, including the steps of:
- receiving an electronic command relating to a first target pressure;
- receiving an electronic command relating to a second target pressure, wherein the second target pressure is higher than the first target pressure;
- receiving a signal indicating measured pressure in the apparatus;
- generating a command for selectively applying the first target pressure or the second target pressure to an output, the output being received by the opposing grips (102, 104) of the materials testing device (100);
- receiving the command for selectively applying the first target pressure or the second target pressure to the output, wherein the first target pressure is applied in response to a first command and the second target pressure is applied in response to a subsequent command; and
- generating pressure control signals for varying pressure, **characterized by**
- receiving a signal indicating measured pressure in the apparatus;
- comparing the measured pressure to the selected first or second pressure to generate the control signals;
- operating the opposing grips (102, 104) of the materials testing device (100) by the first target pressure in a range of greater than 0 to 0.103 MPa (zero to fifteen psi) and by the second target pressure which preferably is in a range of greater than 0.103 to 0.689 MPa (fifteen psi to one hundred psi);
wherein the step of generating a command for selectively applying the first target pressure or the second target pressure is manually actuated.

8. The method of Claim 7,
wherein the first target pressure operates the opposing grips (102, 104) of the materials testing device (100) in a safe range for the human operator.

9. The method of Claim7 or 8,
wherein the second target pressure is the full pressure required for the materials testing device (100).

10. The method of Claim 7,
wherein the step generating a command for selectively applying the first target pressure or the second target pressure is actuated by a footswitch.

11. The method of Claim 7,
wherein the electronic commands for first and second target pressures are generated in response to manual input.

12. The method of Claim 7,
wherein the electronic commands for first and second target pressures are received from the materials testing device (100).

## Patentansprüche

1. Materialprüfsystem, das ein Materialprüfgerät (100) und eine Vorrichtung zum Steuern des Drucks in dem Materialprüfgerät (100) aufweist, wobei die Vorrichtung Folgendes beinhaltet:
- ein Gerät (90), das so konfiguriert ist, dass es einen elektronischen Befehl in Bezug auf einen ersten Zieldruck empfängt;
- ein Gerät (90), das so konfiguriert ist, dass es einen elektronischen Befehl empfängt, der sich auf einen zweiten Zieldruck bezieht, wobei der zweite Zieldruck höher als der erste Zieldruck ist;
- ein Gerät (92), das so konfiguriert ist, dass es einen Befehl zum selektiven Ausüben des ersten Zieldrucks oder des zweiten Zieldrucks an einer Ausgabe erzeugt, wobei die Ausgabe durch gegenüberliegende Griffe (102, 104) des Materialprüfgeräts (100) empfangen wird;
- ein Gerät (32, 36), das so konfiguriert ist, dass es den Befehl zum selektiven Ausüben des ersten Zieldrucks oder des zweiten Zieldrucks an der Ausgabe empfängt, wobei der erste Zieldruck als Reaktion auf einen ersten Befehl ausgeübt wird und der zweite Zieldruck als Reaktion auf einen nachfolgenden Befehl ausgeübt wird; und
- ein Verarbeitungsgerät (16), das so konfiguriert ist, dass es Drucksteuersignale zum Variieren von Druck erzeugt,
**gekennzeichnet durch**
ein Gerät (70), das so konfiguriert ist, dass es ein Signal empfängt, das den gemessenen Druck in der Vorrichtung angibt; wobei das Verarbeitungsgerät (16) so konfiguriert ist, dass es den gemessenen Druck mit dem ausgewählten ersten oder zweiten Druck vergleicht und die Steuersignale erzeugt;
wobei die gegenüberliegenden Griffe (102, 104) des Materialprüfgeräts (100) so konfiguriert sind, dass sie durch den ersten Zieldruck in einem Bereich von größer als 0 bis 0,103 MPa (null bis fünfzehn psi) betätigt werden können; wobei der zweite Zieldruck vorzugsweise in einem Bereich von mehr als 0,103 bis 0,689 MPa (fünfzehn psi bis einhundert psi) liegt; und
wobei das Gerät (92), das so konfiguriert ist, dass es einen Befehl zum selektiven Ausüben des ersten Zieldrucks oder des zweiten Zieldrucks erzeugt, manuell betätigt wird.

2. System nach Anspruch 1,
wobei die gegenüberliegenden Griffe (102, 104) des Materialprüfgeräts (100) so konfiguriert sind, dass sie durch den ersten Zieldruck in einem sicheren Bereich für den menschlichen Bediener betätigt werden können.

3. System nach Anspruch 2,
wobei der zweite Zieldruck der volle Druck ist, der für das Materialprüfgerät (100) erforderlich ist.

4. System nach Anspruch 1,
wobei das Gerät (92), das so konfiguriert ist, dass es einen Befehl zum selektiven Ausüben des ersten Zieldrucks oder des zweiten Zieldrucks erzeugt, ein Fußschalter ist.

5. System nach Anspruch 1,
wobei die elektronischen Befehle für erste und zweite Zieldrücke als Reaktion auf eine manuelle Eingabe von einem Bedienfeld erzeugt werden.

6. System nach Anspruch 1,
wobei die elektronischen Befehle für erste und zweite Zieldrücke von dem Materialprüfgerät (100) empfangen werden.

7. Verfahren zum Steuern von Druck in einem Materialprüfgerät (100) mit einem System nach Anspruch 1, das die folgenden Schritte beinhaltet:
- Empfangen eines elektronischen Befehls in Bezug auf einen ersten Zieldruck;
- Empfangen eines elektronischen Befehls in Bezug auf einen zweiten Zieldruck, wobei der zweite Zieldruck höher als der erste Zieldruck ist;
- Empfangen eines Signals, das den gemessenen Druck in der Vorrichtung angibt;
- Erzeugen eines Befehls zum selektiven Ausüben des ersten Zieldrucks oder des zweiten Zieldrucks an einer Ausgabe, wobei die Ausgabe von den gegenüberliegenden Griffen (102, 104) des Materialprüfgeräts (100) empfangen wird;
- Empfangen des Befehls zum selektiven Ausüben des ersten Zieldrucks oder des zweiten Zieldrucks an der Ausgabe, wobei der erste Zieldruck als Reaktion auf einen ersten Befehl ausgeübt wird und der zweite Zieldruck als Reaktion auf einen nachfolgenden Befehl ausgeübt wird; und
- Erzeugen von Drucksteuersignalen zum Variieren von Druck, **gekennzeichnet durch**
- Empfangen eines Signals, das den gemessenen Druck in der Vorrichtung angibt;
- Vergleichen des gemessenen Drucks mit dem ausgewählten ersten oder zweiten Druck, um die Steuersignale zu erzeugen;
- Betätigen der gegenüberliegenden Griffe (102, 104) des Materialprüfgeräts (100) durch den ersten Zieldruck in einem Bereich von größer als 0 bis 0,103 MPa (null bis fünfzehn psi) und durch den zweiten Zieldruck, der vorzugsweise in einem Bereich von größer als 0,103 bis 0,689 MPa (fünfzehn psi bis einhundert psi) liegt;
wobei der Schritt des Erzeugens eines Befehls zum selektiven Ausüben des ersten Zieldrucks oder des zweiten Zieldrucks manuell betätigt wird.

8. Verfahren nach Anspruch 7,
wobei der erste Zieldruck die gegenüberliegenden Griffe (102, 104) des Materialprüfgeräts (100) in einem sicheren Bereich für die Bedienungsperson betätigt.

9. Verfahren nach Anspruch 7 oder 8,
wobei der zweite Zieldruck der volle Druck ist, der für das Materialprüfgerät (100) erforderlich ist.

10. Verfahren nach Anspruch 7,
wobei der Schritt des Erzeugens eines Befehls zum selektiven Ausüben des ersten Zieldrucks oder des zweiten Zieldrucks durch einen Fußschalter betätigt wird.

11. Verfahren nach Anspruch 7,
wobei die elektronischen Befehle für erste und zweite Zieldrücke als Reaktion auf eine manuelle Eingabe erzeugt werden.

12. Verfahren nach Anspruch 7,
wobei die elektronischen Befehle für erste und zweite Zieldrücke von dem Materialprüfgerät (100) empfangen werden.

## Revendications

1. Système de test de matériaux comportant un dispositif de test de matériaux (100) et un appareil pour la commande de la pression dans ledit dispositif de test de matériaux (100), l'appareil comprenant:
- un dispositif (90) configuré pour recevoir une commande électronique concernant une première pression cible;
- un dispositif (90) configuré pour recevoir une commande électronique concernant une deuxième pression cible, dans lequel la deuxième pression cible est supérieure à la première pression cible;
- un dispositif (92) configuré pour générer une commande pour l'application sélective de la première pression cible ou de la deuxième pression cible à une sortie, la sortie étant reçue par des arceaux opposés (102, 104) du dispositif de test de matériaux (100) ;
- un dispositif (32, 36) configuré pour recevoir la commande pour l'application sélective de la première pression cible ou de la deuxième pression cible à la sortie, dans lequel la première pression cible est appliquée en réponse à une première commande et la deuxième pression cible est appliquée en réponse à une commande ultérieure; et
- un dispositif de traitement (16) configuré pour générer des signaux de commande de pression pour la modification de la pression,
**caractérisé par**
un dispositif (70) configuré pour recevoir un signal indiquant une pression mesurée dans l'appareil;
dans lequel le dispositif de traitement (16) est configuré pour comparer la pression mesurée à la première ou à la deuxième pression sélectionnée et générer les signaux de commande;
dans lequel les arceaux opposés (102, 104) du dispositif de test de matériaux (100) sont configurés pour être actionnés par la première pression cible dans une plage supérieure à 0 jusqu'à 0,103 MPa (de zéro à quinze psi); dans lequel la deuxième pression cible est de préférence dans une plage supérieure à 0,103 jusqu'à 0,689 MPa (de quinze psi à cent psi); et
dans lequel le dispositif (92) est configuré pour générer une commande pour l'application sélective de la première pression cible ou de la deuxième pression cible est actionné manuellement.

2. Système selon la revendication 1,
dans lequel les arceaux opposés (102, 104) du dispositif de test de matériaux (100) sont configurés pour être actionnés par la première pression cible dans une plage de sécurité pour l'opérateur humain.

3. Système selon la revendication 2,
dans lequel la deuxième pression cible est la pression totale requise pour le dispositif de test de matériaux (100) .

4. Système selon la revendication 1,
dans lequel le dispositif (92) configuré pour générer une commande pour l'application sélective de la première pression cible ou de la deuxième pression cible est une pédale de commande.

5. Système selon la revendication 1,
dans lequel les commandes électroniques pour des première et deuxième pressions cibles sont générées en réponse à une entrée manuelle à partir d'un panneau de commande.

6. Système selon la revendication 1,
dans lequel les commandes électroniques pour des première et deuxième pressions cibles sont reçues à partir du dispositif de test de matériaux (100).

7. Procédé pour le contrôle de la pression dans un dispositif de test de matériaux (100) avec un système selon la revendication 1, comprenant les étapes de:
- la réception d'une commande électronique concernant une première pression cible;
- la réception d'une commande électronique concernant une deuxième pression cible, dans laquelle la deuxième pression cible est supérieure à la première pression cible;
- la réception d'un signal indiquant une pression mesurée dans l'appareil;
- la génération d'une commande pour l'application sélective de la première pression cible ou de la deuxième pression cible à une sortie, la sortie étant reçue par les arceaux opposés (102, 104) du dispositif de test de matériaux (100);
- la réception de la commande pour l'application sélective de la première pression cible ou de la deuxième pression cible à la sortie, dans laquelle la première pression cible est appliquée en réponse à une première commande et la deuxième pression cible est appliquée en réponse à une commande ultérieure; et
- la génération de signaux de commande de pression pour la modification de la pression, **caractérisé par**
- la réception d'un signal indiquant une pression mesurée dans l'appareil;
- la comparaison de la pression mesurée à la première ou à la deuxième pression sélectionnée pour générer les signaux de commande;
- l'actionnement des arceaux opposés (102, 104) du dispositif de test de matériaux (100) par la première pression cible dans une plage supérieure à 0 jusqu'à 0,103 MPa (de zéro à quinze psi) et par la deuxième pression cible qui est de préférence dans une plage supérieure à 0,103 jusqu'à 0,689 MPa (de quinze psi à cent psi);
dans lequel l'étape de génération d'une commande pour l'application sélective de la première pression cible ou de la deuxième pression cible est actionnée manuellement.

8. Procédé selon la revendication 7,
dans lequel la première pression cible actionne les arceaux opposés (102, 104) du dispositif de test de matériaux (100) dans une plage de sécurité pour l'opérateur humain.

9. Procédé selon la revendication 7 ou 8,
dans lequel la deuxième pression cible est la pression totale requise pour le dispositif de test de matériaux (100) .

10. Procédé selon la revendication 7,
dans lequel l'étape de génération d'une commande pour l'application sélective de la première pression cible ou de la deuxième pression cible est actionnée par une pédale de commande.

11. Procédé selon la revendication 7,
dans lequel les commandes électroniques pour les première et deuxième pressions cibles sont générées en réponse à une entrée manuelle.

12. Procédé selon la revendication 7,
dans lequel les commandes électroniques pour les première et deuxième pressions cibles sont reçues à partir du dispositif de test de matériaux (100).
